# EUROPEAN PATENT APPLICATION

(11) **EP 3 892 501 A1**
(43) Date of publication of application: **13.10.2021**
(21) Application number: 20168235.8
(22) Date of filing: 06.04.2020
(51) Int. Cl.: B60R 21/00, B60R 21/34

(54) **HEAVY-DUTY BUMPER**

(71) Applicant: 4Extreme Trading S.r.l., 38023 Cles (TN) (IT); Pora Palmonari, Riccardo, 38068 Rovereto (TN) (IT)
(72) Inventor: Pora Palmonari, Riccardo, 38068 Rovereto (TN) (IT)
(74) Representative: PGA S.p.A., Milano, Succursale di Lugano

(57) **Abstract**

The present invention relates to a heavy-duty bumper (10), comprising a body configured to be installed on the front part of a vehicle (100), optionally a front part of an off-road vehicle, the bumper (10) comprising a central part (14) and a couple of wings (11) arranged respectively on a left side and on a right side of the central part (14), wherein said bumper (10) further comprises at least a shock-absorbing element (20), detachably connected to the bumper (10) body in substantial correspondence of at least the central part (14) of the bumper (10), said shock-absorbing element (20) protruding from a front wall or portion (15, 16) of the bumper (10) and being configured to absorb at least part of an impact of at least a pedestrian by at least partially deforming and/or collapsing and/or breaking following said impact, the shock-absorbing element (20) being configured to at least partially prevent a direct and/or frontal contact of said pedestrian with the front wall or portion (15, 16) of said bumper (10).

## Description

### Field of the art

The present disclosure relates to the field of car parts, and in detail relates to a bumper, in particular a heavy-duty bumper.

The present disclosure concerns shock-absorbing element suitable to be installed on a bumper.

### Background

Off road vehicles are conceived for operating and travelling on uneven road, and are typically employed by professionals who for working activities operate in environments wherein roads are made in gravel and/or are muddy or snowy or sandy or even characterized by presence of rocks. As well, off road vehicles are today operated by enthusiasts who typically organize events or tours in areas characterized by non-tarmac roads. Due to their nature, off road vehicles are typically characterized by a ride height (clearance) which is typically higher than that of vehicles conceived for moving on tarmac roads, like cars or CUVs.

Former off road vehicles were somewhat spartan, not only in their interiors, but also and especially in correspondence of their front and rear parts. In fact, bumpers and in general the front and rear parts of off road vehicles were conceived for getting in contrast with several items, like plants, branches, rocks, ground, even animals, without getting damaged. Especially, off road vehicles design kept into account the not-so-remote possibility of contacting the ground when facing uneven parts of tracks or paths with relevant approach and departure angles. Bumpers were typically made in metal, and many times were attached directly to the cross members of the chassis of the vehicles.

During the course of the years, this design - in view of the requests of the market which led many off road producers to transform pure off road vehicles in more city-oriented SUVs - has changed, and formerly metal bumpers evolved to plastic, stylish bumpers. In recent years, only a very reduced alternative of vehicles were produced in series with metal bumpers: among those vehicles, the most widely known one was the Land Rover Defender®.

Even today, it is not difficult to meet off road vehicles, especially the older ones or those which are used actually for professional or competition activities, which are equipped with A-bars, bull-bars, winches, supplementary lights, and so on. All those accessories are typically installed in the front part of the vehicle, in particular in substantial correspondence of the front bumper.

During the course of the years, several regulations have been implemented concerning the safety of pedestrians; those regulations concern the impact of pedestrians with the vehicles, in particular with the front part thereof. Those regulations, albeit it may not be so apparent to the public, have posed a serious issue in the freedom of design, materials, and shape of the bumpers of vehicles. The result of regulations that are progressively more stringent in favor of the safety of the pedestrians, led to the fact that as of today bumpers, in particular metal ones, which once could have been approved by the Commissions, today cannot be installed, even by constructors of vehicles themselves.

Nonetheless, the Applicant considered that among enthusiasts and/or professional users there is still the need of equipping off-road vehicles with heavy-duty bumpers, i.e. bumpers, especially front bumpers, which are made at least partly in metal so as to withstand impacts or loads which normally could not be withstood by traditional plastic bumpers. As of today, actual admissibility of heavy-duty bumpers is quite questionable, and each user substantially needs to have a homologation procedure which is far from being standardized, not only among Countries, but also among the several local authorities which, within a single Country, authorize or deny the installation of the bumper.

Using vehicles off the roads, e.g. on private areas, does not pose limits of installation of aftermarket products, included bumpers, which are not compliant with the regulations. Many professional workers and enthusiasts typically use their vehicles in these conditions. Anyway, the Applicant has noted that professional workers and enthusiasts use the same vehicle also on the road: they have, substantially in several cases, the same vehicle for traditional on-road travels and for off-road and/or professional activities.

The Applicant is aware of the following European regulation: CE 78/2009 regulation, in force from August 24, 2019 for vehicles above 2500kg; this regulation sets limits and imposes several requirements, in particular concerning the impact of pedestrians against bumpers whose height is equal or above than 500mm. Other regulations concerning the bumpers and/or impacts of pedestrians are CE631/2009, UE 459/2011 and UNECE 127/02.

The above and other regulations that may be present in several countries throughout the world, resuming, still pose relevant issues for off-road vehicle owners wishing to legally install and use heavy-duty bumpers on public roads.

### Scope

A first scope of the disclosure is to provide a bumper, in particular a front bumper for off-road vehicles, suitable to withstand relevant forces, and/or impacts, without breaking and which meets today's regulation concerning the safety of pedestrians. Another scope of the disclosure is to provide a bumper, in particular a front bumper, which is made at least partly of metal, in particular iron or steel. Another scope of the disclosure is to provide a bumper which is shaped so as to allow possible increase of the approach angles of the off-road vehicle, in particular if compared to standard ones. Another scope of the disclosure is to provide a bumper which is provided with a sacrificial part which is used to reduce the force transmitted to the pedestrian in case of impact with the vehicle.

### Summary

The aforementioned scopes and other scopes are obtained by means of a bumper according to the following aspects, which can be combined together in any suitable form.

According to a first aspect, it is herewith disclosed a heavy-duty bumper (10), comprising a body configured to be installed on the front part of a vehicle (100), optionally a front part of an off-road vehicle, the bumper (10) comprising a central part (14) and a couple of wings (11) arranged respectively on a left side and on a right side of the central part (14),
wherein said bumper (10) further comprises at least a shock-absorbing element (20), detachably connected to the bumper (10) body in substantial correspondence of at least the central part (14) of the bumper (10), said shock-absorbing element (20) protruding from a front wall or portion (15, 16) of the bumper (10) and being configured to absorb at least part of an impact of at least a pedestrian by at least partially deforming and/or collapsing and/or breaking following said impact, the shock-absorbing element (20) being configured to at least partially prevent a direct and/or frontal contact of said pedestrian with the front wall or portion (15, 16) of said bumper (10).

According to another non-limiting aspect, the bumper (10) is a heavy-duty bumper.

According to another non-limiting aspect, the bumper (10) comprises a first operative configuration wherein the shock-absorbing element (20) is installed on the bumper body and a second operative configuration wherein the shock-absorbing element (20) is removed from the bumper body.

According to another non-limiting aspect, the first operative configuration is a configuration for using the bumper (10) on public roads.

According to another non-limiting aspect, the second operative configuration is a configuration for off-road use.

According to another non-limiting aspect, the shock-absorbing element (20) at least partially, optionally substantially completely, covers the front wall or portion (15, 16) at least in correspondence of said central part (14).

According to another non-limiting aspect, said central part (14) has a width substantially equal or lower than the gap between a front left wheel and a front right wheel of the vehicle (100) to which said bumper (10) is configured to be installed on.

According to another non-limiting aspect, the body of said bumper (10) is substantially rigid, and/or at least part of the body of said bumper (10) is realized at least partially, preferably substantially, in metal.

According to another non-limiting aspect, the body of said bumper (10) is realized in a sheet of metal, in particular a bent or welded sheet of material, whose thickness is substantially comprised between 1mm and 4mm, preferably between 2mm and 3mm.

According to another non-limiting aspect, the metal comprises a high-strength and/or a low-alloyed steel.

According to another non-limiting aspect, the metal comprises Strenx 700 steel.

According to another non-limiting aspect, the shock-absorbing element (20) is realized at least partially in a deformable material, optionally at least partially in a plastic material.

According to another non-limiting aspect, said plastic material is ABS.

According to another non-limiting aspect, the shock-absorbing element (20) defines an overall multi-faceted wall which has at least a part having a thickness substantially comprised between 1mm and 4mm, preferably between 2mm and 3mm, optionally the shock-absorbing element (20) defines an overall multi-faceted wall which has a thickness substantially comprised between 1mm and 4mm, preferably between 2mm and 3mm.

According to another non-limiting aspect, the shock-absorbing element (20) is detachably connected to the bumper (10) body by means of a screwed connection.

According to another non-limiting aspect, the shock-absorbing element (20) is provided with at least one, preferably a plurality of, screw(s), suitable to allow said detachable connection to the bumper (10) body.

According to another non-limiting aspect, the shock-absorbing element (20) comprises a back portion (27) substantially configured to contact the front wall or portion (15, 16) of the bumper (10) and a front portion (28) substantially opposed to the back portion (27); the back portion (27) substantially defining a cavity suitable to house part of the front wall or portion (15, 16) and/or to match at least partially the shape of the front wall or portion (15, 16).

According to another non-limiting aspect, the shock-absorbing element (20) is configured to be installed at a height substantially equal or above than 500mm, and/or the bumper (10) is configured to be installed at a height so that, when the first operative configuration takes place, the shock-absorbing element (20) lies at a height from the ground substantially equal or above than 500mm.

According to another non-limiting aspect, the shock-absorbing element (20) comprises a shock absorbing foam (29), arranged in substantial correspondence of said cavity so as to be affixed or stick to at least one wall thereof; the shock absorbing foam being configured to absorb at least a part of an impact force with a pedestrian and/or to limit a force of impact transmitted to said pedestrian by the vehicle (100).

According to another non-limiting aspect, said shock absorbing foam has a density substantially comprised between 10 kg/m³ and 24 kg/m³, preferably comprised between 14 kg/m³ and 22 kg/m³, more preferably between 16 kg/m³ and 18 kg/m³.

According to another non-limiting aspect, the shock absorbing foam (29) has a compression resistance substantially comprised between 0,03 MPa and 0,07MPa.

According to another non-limiting aspect, the shock absorbing foam (29) has a traction resistance substantially comprised between 0,12 MPa and 0,16 MPa.

According to another non-limiting aspect, the shock absorbing foam (29) is a CFC-free foam.

According to another non-limiting aspect, the shock absorbing foam (29) is a heat-resistant and/or flame-retardant shock absorbing foam.

According to another non-limiting aspect, the wings (11) are inclined backwards of a predetermined angle (α) with respect to a front plane (Z-X) of the bumper (10). In particular, according to another non-limiting aspect, the wings (11) comprise, each, at least one wall, optionally a front wall, which is inclined backwards of a predetermined angle (α) with respect to a front plane (Z-X) of the bumper (10).

According to another non-limiting aspect, the wings (11) are inclined upwards of a predetermined angle (β) with respect to the direction defined by said bottom wall (12) and/or with respect to said first, transversal, axis (X), and reach a minimum height from the ground at substantial correspondence of the conjunction with the central part (14) of the bumper (10).

According to another non-limiting aspect, the bumper (10) body comprises a bottom wall (12) arranged in substantial correspondence of the central part (14); said bottom wall (12) extending substantially along the width of the bumper (10) and defining a direction of maximal extension which is parallel to a first, transversal, axis (X).

According to another non-limiting aspect, the bottom wall (12) is inclined with respect to a horizontal plane (X-Y) so as to provide a ramp whose height with respect to the ground is lower in substantial correspondence of a back part of the bumper body, which is configured to be connected in use to a frame of the vehicle (100), and higher in substantial correspondence of the front wall or portion (15, 16) of the bumper (100); the height with respect to the ground is in particular at its highest at the conjunction with the front wall (15).

According to another non-limiting aspect, the bumper (10) is specifically targeted and/or destined to be installed on vehicles of M1, M1G, N1 category, in particular with overall mass greater than 2500 kg.

According to another non-limiting aspect, the bumper (10) is configured to meet and/or meets the requirements of CE 78/2009 for vehicles with overall mass greater than 2500 kg.

According to another non-limiting aspect, the bumper (10) weights less than 18kg or less than 15 kg.

According to another non-limiting aspect, the front wall (15) comprises at least one slotted hole (13) configured to allow the passage of a winch cable; optionally, said slotted hole (13) substantially extending along a maximum development direction which is parallel to the direction of the width of the bumper (10).

According to another non-limiting aspect, the bumper (10) comprises guiding rollers, arranged in substantial correspondence of the slotted hole (13) or the slotted hole (13) is configured to house said guiding rollers or to be removably coupled with said guiding rollers or with a guiding rollers support housing said guiding rollers; the guiding rollers being configured to guide the winch cable while winding or unwinding on a winch drum.

According to another non-limiting aspect, the guiding rollers comprise an upper roller, arranged or configured to be installed at substantial correspondence of a top wall of the slotted hole (13), a lower roller, arranged or configured to be installed at substantial correspondence of a bottom wall of the slotted hole (13) and a couple of left and right rollers, arranged or configured to be installed at substantial correspondence of a left side and of a right side of the slotted hole (13).

According to another non-limiting aspect, the guiding rollers support is configured to be installed at a substantial correspondence of the slotted hole (13) and/or at a substantial correspondence of the front wall (15) of the bumper (10) body, so as to be removably detachable therefrom.

According to another non-limiting aspect, the slotted hole (13) is covered by the shock-absorbing element (20) when the bumper is in the first operative configuration.

According to another non-limiting aspect, the slotted hole (13) is arranged at a front wall (15) of the bumper (10) body, optionally wherein said front wall (15) lies in use substantially on a vertical plane (Z-X).

According to another non-limiting aspect, the bumper (10) body comprises a bottom slotted hole (31), optionally arranged at a bottom wall (12); the bottom slotted hole (31) being configured to allow the passage of a standard front towing hook or ring of said vehicle (100).

According to another non-limiting aspect, the shock-absorbing element (20) comprises a small slit, arranged substantially at a back portion (27) of the shock-absorbing element (20), wherein the back portion (27), when the bumper (10) is in the first operative configuration, substantially contacts at least the front wall or portion (15, 16) of the bumper (10) body; the small slit being configured to allow the passage of at least a winch cable.

According to another non-limiting aspect, the bumper (10) comprises a plurality of openings (11f) for illumination devices, in particular for daytime running lights and/or fog lights and/or headlights, the openings (11f) facing towards the front part (16) of the bumper (10) so that to allow, in use, the projection of a light beam substantially forward of the vehicle (100).

According to another non-limiting aspect, the openings (11f) are arranged at a position so that the projection of the light of an illumination device installed in substantial correspondence thereof is not interfered by the shock-absorbing element (20) when the bumper (10) is in the first operative configuration.

According to another non-limiting aspect, the openings (11f) are arranged in substantial correspondence of the wings (11).

According to another non-limiting aspect, each of the left wing and the right wing comprise at least one own opening (11f).

According to the present disclosure is disclosed the use of the bumper (10) according to one or more of the present aspects, on vehicles (100), in particular on off-road vehicles, or SUVs, or CUVs or pick-ups.

According to the present disclosure a shock-absorbing element (20) for a vehicle bumper is disclosed, said shock-absorbing element (20) comprising a substantially collapsible and/or deformable body and is suitable to be removably installed at a substantially correspondence of a front part of a bumper (10), in particular of a heavy-duty bumper (10) configured to be installed on the front portion of a vehicle (100); the shock-absorbing element (20) being configured and specifically designed to reduce - through a deformation and/or a breaking - an impact force transmitted to a pedestrian in case of an impact; the shock-absorbing element (20) comprises a substantially boxed structure defining a front portion (28) and a back portion (27) substantially opposed to said front portion (28), wherein the back portion (27) is the portion which in use is substantially closer to the bumper (10), said boxed structure comprising at least one cavity opening on said back portion (28).

According to another non-limiting aspect, the shock-absorbing element (20), when installed on said bumper (10), is configured to protrude from the front part of the bumper (10) and/or to house at least a part of at least a central part (14) of said bumper.

According to another non-limiting aspect, the back portion (27) is shaped so as to match, at least partially, the front shape of at least a central part of the bumper (10).

According to another non-limiting aspect, the shock-absorbing element (20) is realized substantially in plastic.

According to another non-limiting aspect, the shock-absorbing element (20) is configured to make the bumper (10) compliant with CE 78/2009 regulation, optionally with item 2.1, b) and 3.1, b) of Annex 1 of CE78/2009 regulation.

### Figures

The object of the present disclosure will be presented hereinafter in one or more embodiments, which are non-limiting; those embodiments are described with the help of the annexed figures wherein:
- figure 1 shows a front and overall view of a bumper according to the present disclosure when installed on an off-road vehicle;
- figure 2 shows an exploded perspective exploded view of the bumper according to the present disclosure;
- figure 3 shows a front view of the bumper of the present disclosure;
- figure 4 shows a lateral view of a shock-absorbing element of the bumper according to the present disclosure;
- figure 5 shows a partial section of the bumper according to figure 4;
- figure 6 shows a perspective view of a shock-absorbing element according to the present disclosure.

### Detailed description

With the reference number 100, it is disclosed a vehicle, which may be provided with a bumper, in particular a heavy-duty bumper 10 which is object of the present disclosure. For the purposes of the present disclosure, a "heavy-duty" bumper is a bumper which is at least partially, preferably substantially, realized in metal and/or which is specifically conceived or configured to withstand forces or impacts above the forces or impacts which are normally withstood by traditional plastic bumpers and/or which is configured to be used for professional purposes. The vehicle 100 may be in particular a vehicle belonging to the "off-road" vehicles class.

For the purposes of the present disclosure, with the term "off road vehicles" shall be intended SUVs or even CUVs suitable to travel at least partially on uneven road, in particular on gravel and/or rocky and/or snowy and/or muddy and/or sandy roads, without getting damaged. In a particular embodiment, with the term "off road vehicles" shall be intended vehicles whose ride height (clearance) is higher than that of the traditional vehicles conceived for travelling principally on tarmac roads; this ride height may be for instance higher than 20cm. An "off road vehicle" may be equipped with off-road tires, e.g. all-terrain or mud-terrain or "M+S" tires, and may have a four wheel drive transmission and/or one or more automatically or manually locking differentials, a transfer case which allows the user to select between a high-range set of gears and a low-range set of gears, disconnectable sway bars. An "off road vehicle" may have a ladder-type frame provided with side members and cross members.

The heavy-duty bumper 10 according to the disclosure is in particular a front bumper, i.e. a bumper which is specifically conceived to be installed on a front part of the vehicle 100.

For helping the reader in identifying the various parts of the bumper 10, this latter will be described also referring to the following axes: a first axis X which identifies the width of the bumper, a second axis Y which identifies the thickness of the bumper and a third axis Z which identifies the height of the bumper. All those three axes are orthogonal to each other.

When the bumper is installed on the vehicle 100, the first axis X identifies the width of the vehicle, the second axis Y is parallel to the longitudinal axis of the vehicle and the third axis Z is parallel to the axis, which identifies the height of the vehicle 100.

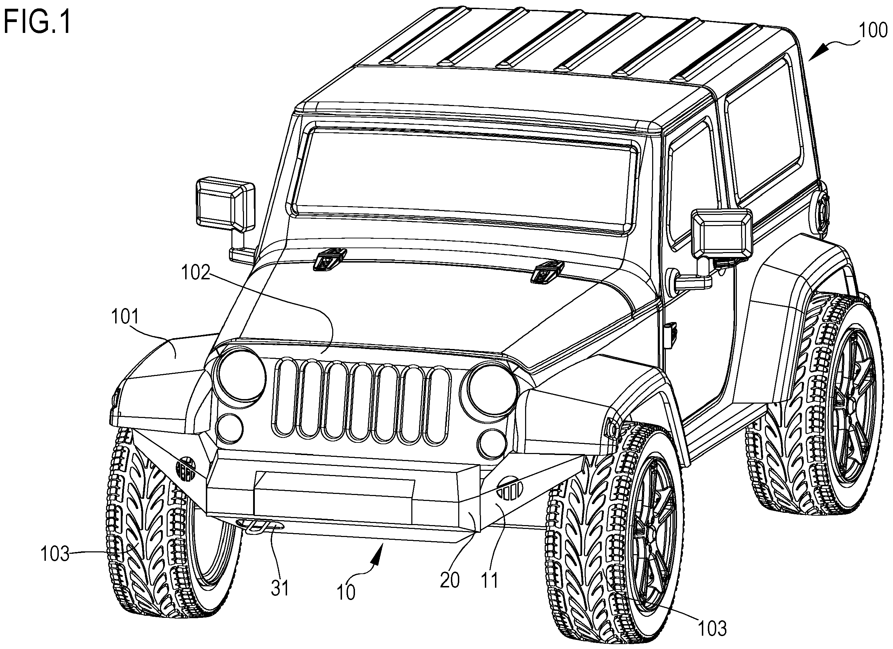

The bumper 10 comprises a central part 14 and a couple of wings 11 which are installed respectively on the left and on the right side of the central part 14; the bumper 10 is installed in substantial correspondence of the central front portion of the vehicle 100 so that the central part 14 substantially is transversally centered between the front wheels of the vehicle. The overall transversal size of the bumper 10 is such that the wings 11 may be substantially aligned to the corresponding left or right wheel of the vehicle 100 or aligned with lateral portions of the bonnet of the vehicle. The central part 14, in other words, has a width substantially equal or lower than the gap between a front left wheel and a front right wheel of the vehicle 100 to which said bumper 10 is configured to be installed on. In a particular embodiment, shown in figure 1, end portions of the wings may be substantially aligned to the outer portion of the mudguards 101 of the vehicle.

The central part 14 of the bumper comprises an upper wall, a front wall 15 and a lower or bottom wall 12, wherein in particular the front wall 15 is arranged so as to be in a plane which is substantially parallel to the plane defined by the first axis X and the second axis Y. The front wall 15 may be the wall which protrudes most from the bumper 10, in particular when a shock-absorbing element which constitutes a sacrificial portion for limiting the impact force in case of a collision and which will be described better in the following portion of the description, is not mounted.

In detail, the front wall 15 comprises at least one slotted hole, identified by the reference number 13, which is configured to allow the passage of a winch cable. In a preferred embodiment, which is that depicted in the annexed figures, the slotted hole 13 extends substantially along a maximum development direction which is parallel to the direction of the width of the bumper 10, or which is substantially parallel to the first axis X.

In a particular embodiment, the bumper 10 may comprise, or the slotted hole 13 may house or may be removably coupled with, guiding rollers, arranged in substantial correspondence of the slotted hole 13; the guiding rollers may be arranged on a guiding roller support; the guiding rollers, which are preferably realized in metal, are configured to guide the winch cable while winding or unwinding on a winch drum. In particular, the guiding rollers comprise an upper roller, arranged at substantial correspondence of a top wall of the slotted hole 13, a lower roller, arranged at substantial correspondence of a bottom wall of the slotted hole 13 and a couple of left and right rollers, arranged at substantial correspondence of a left side and of a right side of the slotted hole 13. In case the guiding rollers are installed on a guiding rollers support, which may be removably coupled with the bumper body, in particular with the front wall 15 in substantial correspondence of the slotted hole 13, the upper roller may be at a height substantially corresponding to the top wall of the slotted hole 13, the lower roller may be at a height substantially corresponding to the bottom wall of the slotted hole 13, and the left and right rollers may be arranged at a substantial correspondence of the left and, respectively, right side of the slotted hole 13.

The bottom wall 12 is inclined with respect to a horizontal plane X-Y so as to provide a sort of ramp whose height with respect to the ground is lower in substantial correspondence of the back part of the bumper body - the part which is substantially connected to the frame of the vehicle 100 - and higher in substantial correspondence of the front part of the bumper; the height with respect to the ground is in particular at its highest at the conjunction with the front wall 15.

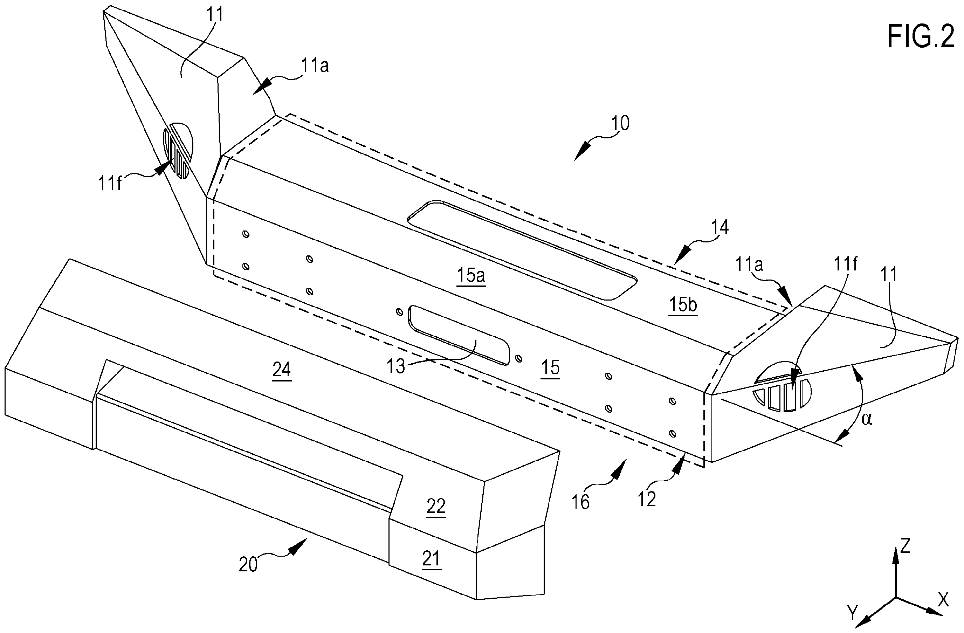

The bumper 10 may comprise a plurality of openings 11f for illumination devices, in particular for daytime running lights and/or fog lights and/or headlights. As it can be clearly seen from e.g. figure 2, the openings 11f face towards the front part 16 of the bumper 10 so that to allow, in use, the projection of a light beam substantially in a direction parallel to the Y axis, i.e. forward of the vehicle 100. The openings 11f may be fully circular or may be provided with transversal bars, as depicted, which are provided with the scope of protecting the light element installed in correspondence thereof.

In a preferred and non-limiting embodiment of the bumper according to the present disclosure, the central part 14 of the bumper body may comprise a front vertical wall 15, which is arranged on a plane substantially parallel to the X-Z plane, an upper wall 15a which lies on a plane which is inclined with respect to the X-Z plane and a top wall 15b which lies on a plane which is substantially parallel to the X-Y plane, i.e. it is substantially horizontal. It may be noted that the top height reached by the central part 14 of the bumper body is lower than the top height of the bumper body, which is instead reached in substantial correspondence of a top portion of the wings 11. Therefore, each wing may be provided with a conjunction wall 11a which contacts the left and the right edges of the top wall 15b and which acts as a wall which connects the top wall 15b of the central part 14 with the top portion of the respective wing.

The bumper 10 according to the present disclosure comprises a shock-absorbing element through which it can comply with the current regulations for being suitable to be legally usable on public roads. Such shock-absorbing element is identified by the reference number 20. The shock-absorbing element can be installed or, in contrast, removed from the body of the bumper 10, so as to be removably attachable at substantial correspondence at least of the central part 14. Therefore, the bumper 10 comprises a first operative configuration wherein the shock-absorbing element 20 is installed on the bumper body and a second operative configuration wherein the shock-absorbing element is removed from the bumper body; in detail, the first operative configuration is the configuration for public road use, while the second operative configuration is the configuration which may be typically used in off-road applications.

The requirement of the shock-absorbing element 20 on the bumper 10 for public road use is due to the fact that the body of the bumper 10 is substantially rigid, and in particular at least part of the bumper is realized in metal.

The shock-absorbing element 20, when installed on the bumper 10 body, therefore protrudes from the front part of the body of the bumper 10; in other words, when an impact with an object, in particular a pedestrian, may take place, the shock-absorbing element 20 may be the first part which the pedestrian contacts.

The shock-absorbing element 20 of the present disclosure at least partially covers a front wall or portion 15, 16 of the bumper 10, at least substantially covering the central part 14 thereof. Clearly, when the bumper is provided with the aforementioned slotted hole 13, the shock-absorbing element 20, in the first operative configuration, covers the slotted hole 13. In one embodiment, which is not depicted, should a hook protrude in use from the slotted hole 13 (the hook may be conveniently attached to the winch cable), the shock-absorbing element 20 may protect the hook against a direct impact with a pedestrian; this means that the shock-absorbing element may have sufficient space to house at least the hook.

In another embodiment, which is the embodiment the Applicant chose as preferred, albeit non-limiting, the bottom wall 23 of the shock-absorbing element may comprise a small slit, arranged in correspondence of the edge close to the back portion 27. When in first operative configuration, wherein the back portion 27 substantially contacts the front wall 15 of the bumper 10 body, the small slit allows the passage of the winch cable.

It may be noted that a particular embodiment of the bumper 10 may be provided with a bottom slotted hole, identified by the reference number 31, which is specifically configured to allow a standard front towing hook or ring protrude from the bumper body. The bottom slotted hole may be conveniently arranged at the bottom wall 12. When in this latter embodiment, the hook which is connected to the winch cable may be attached to the standard front towing hook or ring. Thus this embodiment allows for letting the winch cable and/or winch hook substantially not to interfere with the shock-absorbing element 20.

In a preferred and non-limiting embodiment, the shock-absorbing element is such that, when the bumper is in its first operative configuration, the bumper with the shock-absorbing element complies with CE 78/2009 regulation, in force from August 24, 2019 for vehicles above 2500kg; this regulation sets limits and imposes several requirements, in particular concerning the impact of pedestrians against bumpers whose height is equal or above than 500mm. The overall assembly of the bumper body and the shock-absorbing element further meet the regulations concerning the bumpers and/or impacts of pedestrians CE631/2009, UE 459/2011 and UNECE 127/02.

Therefore, a non-limiting embodiment of the shock-absorbing element 20 of the present disclosure is configured to be installed at a height substantially equal or above than 500mm; equivalently, the bumper 10 may be configured to be installed at a height so that, when the first operative configuration takes place, the shock-absorbing element 20 lies at a height from the ground substantially equal or above than 500mm.

It may be noted that the shock-absorbing element 20 constitutes a sacrificial part which may break or be deformed in case of an impact with any obstacle, in particular a pedestrian. The technical effect of the break of at least a deformation is a reduction of the force pulse, in other words a dissipation of the force or a reduction of the peak thereof, as a result of at least the deformation, which helps in reducing the injuries that may otherwise be caused to the pedestrian.

For this purpose, a particular and non-limiting embodiment of the shock-absorbing element is realized in a deformable material; the Applicant has preferred to have the shock-absorbing element 20 to be realized at least partially, preferably substantially completely, in a plastic material. Albeit several types of materials may be suitable for the purpose, Applicant has found that for the purpose of meeting the aforementioned regulations and/or for the purpose of having a substantial effective shock absorption in case of an impact with a pedestrian, the ABS may be one among the most effective plastic materials. Moreover, the choice of the plastic material allows to limit the overall weight of the shock-absorbing element 20 and thus of the bumper 10 of the present disclosure. It may be noted, that since the bumper is installed before the front axis of the vehicle, an excessive mass thereof should be avoided in order to not to compromise the maneuverability of the vehicle 100 when used on public roads, and to reduce the effect of compression of the front shock absorbers should the vehicle face trenches or steps with the front axle.

For the above purposes, a preferred and non-limiting embodiment of the shock-absorbing element 20 defines an overall wall which has at least a part with a thickness substantially comprised between 1mm and 4mm, preferably between 2mm and 3mm, optionally the shock-absorbing element 20 defines an overall wall which has a thickness substantially comprised between 1mm and 4mm, preferably between 2mm and 3mm. It may be noted that the best choice for the Applicant is to have a thickness substantially corresponding to 2,5mm. This way, the weight of the shock-absorbing element 20 may be limited to about 2-3 kg.

The Applicant has noted that the shock-absorbing element may be securely attached to the front portion of the vehicle 100, in particular in the first operative configuration wherein the bumper may be used on public roads; in particular, it may be desirable that the shock-absorbing element 20 does not inadvertently detach from the rest of the bumper 10 body. For this purpose, in a particular and non-limiting embodiment, a screwed connection has been realized to attach the shock-absorbing element 20 to the bumper body. In detail, the shock-absorbing element 20 may be provided with at least one, preferably a plurality of, screw(s), suitable to allow the shock-absorbing element 20 to be detachably connected to the bumper 10 body. In a particular and non-limiting embodiment, the connection may be realized by means of four screws arranged in substantial correspondence of a left side (two screws) and of a right side (two screws) of the shock-absorbing element.

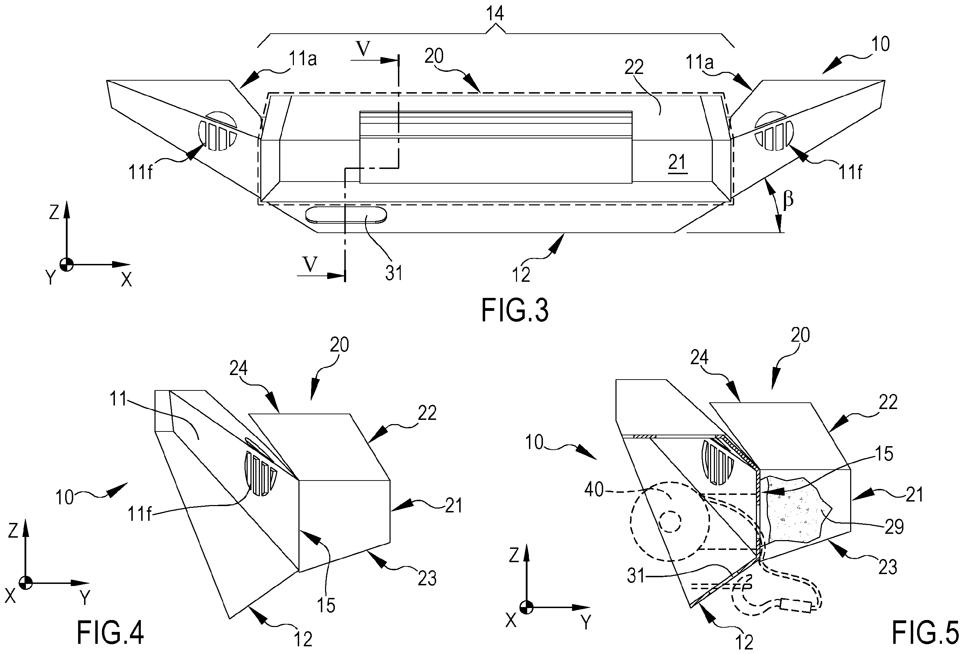

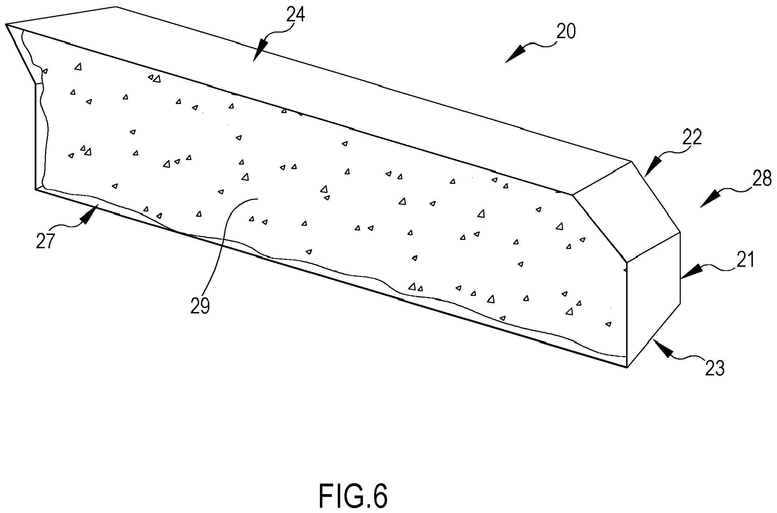

As it can be seen clearly from figure 4, from figure 5, and from figure 6, the shock-absorbing element 20 realizes a substantially boxed structure which is substantially open on one side and which comprises a left lateral wall and an opposite right lateral wall. More in detail, the shock-absorbing element 20 comprises a back portion 27 substantially configured to contact the front wall or portion 15, 16 of the bumper 10 body and a front portion 28 substantially opposed to the back portion 27; the back portion 27 substantially defining a cavity suitable to house part of the front wall or portion 15, 16. The back portion, in a preferred and non-limiting embodiment, may comprise a couple of wall edges of a respective left and right lateral wall of the shock-absorbing element which lie in a direction substantially parallel to the Z axis, and which, therefore match with the front vertical wall 15 of the central part 14 of the bumper 10 body and a couple of inclined wall edges of said respective left and right lateral wall of the shock-absorbing element 20, whose inclination matches with the inclination assumed by the upper wall 15a of the central part 14 of the bumper body.

In a particular embodiment, which is shown in figure 4 and in figure 5, the shock-absorbing element comprises: a front vertical wall 21, which lies on a plane which is parallel to the Z-X plane, a bottom wall 23, having one side contacting the bottom side of the front vertical wall 21, an upper wall 22, whose bottom side contacts the top side of the front vertical wall, and a top wall 24 which is preferably arranged on a plane being substantially parallel to the X-Y plane (i.e. it is substantially horizontal). It may be noted that the bottom wall 23 may lie on a plane parallel to the X-Y plane, i.e. may be substantially horizontal, or may be inclined with respect to this latter plane to realize a sort of ramp. The upper wall is inclined in an opposite direction with respect to the inclination assumed by the bottom wall. The bottom wall 23, when the bumper 10 is in its first operative configuration, realizes a conjunction wall which substantially realizes a bridge between the front vertical wall 21 and the bottom wall 12 of the bumper body. In a preferred, non-limiting, embodiment, the front vertical wall 21 has a vertical extension substantially similar to the vertical extension of the front wall 15 of the bumper 10 body.

A particular embodiment of the shock-absorbing element 20 comprises a shock absorbing foam 29, arranged in substantial correspondence of said cavity so as to be affixed or stick to at least one wall thereof. The Applicant has considered that the shock absorbing foam 29 contributes to provide a progressive absorption of at least a part of an impact force with a pedestrian and/or to limit a force which, should the vehicle 100 impact against the pedestrian, may be transmitted to this latter.

Albeit several types of shock absorbing foams 29 may be used, the Applicant has found a preferable - albeit non limiting - formulation for such foam. Preferably, the foam may have a density substantially comprised between 10 kg/m³ and 24 kg/m³, preferably comprised between 14 kg/m³ and 22 kg/m³, more preferably between 16 kg/m³ and 18 kg/m³, and/or may have a compression resistance substantially comprised between 0,03 MPa and 0,07 MPa, and/or may have a traction resistance substantially comprised between 0,12 MPa and 0,16 MPa.

In order to reduce the environmental impact of the shock-absorbing element 20, it may be noted that the shock absorbing foam 29 may be a CFC-free foam.

The Applicant has further noticed that the bumper 10 is not too far from parts of the vehicle, in particular the engine or other parts of the engine bay (e.g. the turbocharger or the radiator, or even the electric motor of a winch) which may become relevantly hot. Therefore, a preferable embodiment of the shock-absorbing element may be provided with a heat-resistant and/or flame-retardant shock absorbing foam 29.

Hereinafter, some further non-limiting details for a preferred embodiment of the bumper 10 according to the present disclosure are presented. The body of said bumper 10 is substantially rigid, and/or at least part of the body of said bumper 10 is realized in metal. It may be noted that in particular embodiments, the body of the bumper 10 is realized in a sheet of metal, in particular a bent or welded sheet of material, whose thickness is substantially comprised between 1mm and 4mm, preferably between 2mm and 3mm. The Applicant has chosen Strenx 700 steel among several alternatives of steel as a preferred one, since this latter provides sufficient robustness and imperviousness against rust. Other alternatives may include high-strength and/or low-alloyed steels.

The advantages of the bumper according to the present disclosure are clear in the light of the previous description. The bumper may be installed as an aftermarket product for existing vehicles, and complies with the regulations concerning the safety of pedestrian; thus, where required, it can be homologated for on-road use.

The bumper 10 has been tested for instance on a Jeep Wrangler JK-JKU and JL-JLU (U=unlimited, i.e. long version or 5 door version) with a prescribed lifting which shall be comprised between 2,5" and 3,5"; the bumper 10 according to the present disclosure meets the aforementioned regulations when the vehicle has 35" or 37" wheels.

The bumper according to the present disclosure meets the requirements of CE 78/2009 regulation, in particular those of item 2.1, b) and 3.1, b) of Annex 1 concerning the impact of pedestrians against bumpers whose height is equal or above 500mm.

The bumper according to the present disclosure further meets the requirements of CE 631/2009, UE 459/2011 and UNECE 127/02 regulations.

Tests performed by the Applicant shown that in case of an impact of a short wheelbase Jeep Wrangler™ with an impact speed of 35 km/h against a headform with 4,5kg of mass, in correspondence of a substantial central portion of the shock-absorbing element 20 and with an impact angle of 65°, a maximum deceleration of less than 150g has resulted, with a displacement (compression) of the shock-absorbing element of less than 80mm. Other tests performed by the Applicant shown an upper femur force of maximum 3,7kN and a lower femur force of maximum 3,40 kN and a sum of femur force of maximum 7,04 kN when a short wheelbase Jeep Wrangler™ has impacted with the following conditions: impact speed: 11.06m/s, impactor mass 9,5kg, impactor angle 0°.

It is noteworthy that the invention is not limited to the annexed figures; it is thus clear that the reference numbers which are presented in the claims are provided with the sole purpose of increasing the intelligibility of the claims and do not provide any limitation.

It is finally clear that to the object of the present disclosure several adaptations and additions may be carried out without for this departing from the scope of protection provided by the annexed claims.

## Claims

1. A heavy-duty bumper (10), comprising a body configured to be installed on the front part of a vehicle (100), optionally a front part of an off-road vehicle, the bumper (10) comprising a central part (14) and a couple of wings (11) arranged respectively on a left side and on a right side of the central part (14),
wherein said bumper (10) further comprises at least a shock-absorbing element (20), detachably connected to the bumper (10) body in substantial correspondence of at least the central part (14) of the bumper (10), said shock-absorbing element (20) protruding from a front wall or portion (15, 16) of the bumper (10) and being configured to absorb at least part of an impact of at least a pedestrian by at least partially deforming and/or collapsing and/or breaking following said impact, the shock-absorbing element (20) being configured to at least partially prevent a direct and/or frontal contact of said pedestrian with the front wall or portion (15, 16) of said bumper (10).

2. A bumper according to claim 1, wherein the bumper (10) comprises a first operative configuration wherein the shock-absorbing element (20) is installed on the bumper body and a second operative configuration wherein the shock-absorbing element (20) is removed from the bumper body;
the first operative configuration is a configuration for using the bumper (10) on public roads;
the second operative configuration is a configuration for off-road use;
and wherein the shock-absorbing element (20) at least partially, optionally substantially completely, covers the front wall or portion (15, 16) at least in correspondence of said central part (14).

3. A bumper according to claim 1 or 2, wherein the body of said bumper (10) is substantially rigid, and/or at least part of the body of said bumper (10) is realized at least partially, preferably substantially, in metal.

4. A bumper according to claim 3, wherein the body of said bumper (10) is realized in a sheet of metal, in particular a bent or welded sheet of material, whose thickness is substantially comprised between 1mm and 4mm, preferably between 2mm and 3mm, and wherein the metal is a high-strength and/or a low-alloyed steel.

5. A bumper according to one or more of the preceding claims, wherein the shock-absorbing element (20) is realized at least partially in a deformable material, optionally at least partially in a plastic material, wherein said plastic material is ABS, and/or wherein the shock-absorbing element (20) defines an overall multi-faceted wall which has at least a part having a thickness substantially comprised between 1mm and 4mm, preferably between 2mm and 3mm, optionally the shock-absorbing element (20) defining an overall multi-faceted wall which has a thickness substantially comprised between 1mm and 4mm, preferably between 2mm and 3mm.

6. A bumper according to one or more of the preceding claims, wherein the shock-absorbing element (20), when installed on said bumper (10) body, is configured to protrude from the front part of the bumper (10) and/or to house at least a part of at least a central part (14) of said bumper,
and wherein the shock-absorbing element (20) comprises a back portion (27) substantially configured to contact the front wall or portion (15, 16) of the bumper (10) and a front portion (28) substantially opposed to the back portion (27); the back portion (27) substantially defining a cavity suitable to house part of the front wall or portion (15, 16) and/or to match at least partially the shape of the front wall or portion (15, 16).

7. A bumper according to claim 6, wherein the shock-absorbing element (20) comprises a shock absorbing foam (29), arranged in substantial correspondence of said cavity so as to be affixed or stick to at least one wall thereof; the shock absorbing foam being configured to absorb at least a part of an impact force with a pedestrian and/or to limit a force of impact transmitted to said pedestrian by the vehicle (100).

8. A bumper according to claim 7, wherein:
- the shock absorbing foam has a density substantially comprised between 10 kg/m³ and 24 kg/m³, preferably comprised between 14 kg/m³ and 22 kg/m³, more preferably between 16 kg/m³ and 18 kg/m³; and/or
- the shock absorbing foam (29) has a compression resistance substantially comprised between 0,03 MPa and 0,07 MPa; and/or
- the shock absorbing foam (29) has a traction resistance substantially comprised between 0,12 MPa and 0,16 MPa; and/or
- the shock absorbing foam (29) is a CFC-free foam; and/or
- the shock absorbing foam (29) is a heat-resistant and/or flame-retardant shock absorbing foam.

9. A bumper according to one or more of the preceding claims, wherein the wings (11) are inclined backwards of a predetermined angle (α) with respect to a front plane (Z-X) of the bumper (10), and/or the wings (11) comprise, each, at least one wall, optionally a front wall, which is inclined backwards of a predetermined angle (α) with respect to a front plane (Z-X) of the bumper (10).

10. A bumper according to one or more of the preceding claims, wherein the bumper (10) body comprises a bottom wall (12) arranged in substantial correspondence of the central part (14); said bottom wall (12) extending substantially along the width of the bumper (10) and defining a direction of maximal extension which is parallel to a first, transversal, axis (X).

11. A bumper according to claim 10, wherein the wings (11) are inclined upwards of a predetermined angle (β) with respect to the direction defined by said bottom wall (12) and/or with respect to said first, transversal, axis (X), and reach a minimum height from the ground at substantial correspondence of the conjunction with the central part (14) of the bumper (10).

12. A bumper according to claim 10 or to claim 11, wherein the bottom wall (12) is inclined with respect to a horizontal plane (X-Y) so as to provide a ramp whose height with respect to the ground is lower in substantial correspondence of a back part of the bumper body, which is configured to be connected in use to a frame of the vehicle (100), and higher in substantial correspondence of the front wall or portion (15, 16) of the bumper (100); the height with respect to the ground is in particular at its highest at the conjunction with the front wall (15).

13. A shock-absorbing element (20) for a vehicle bumper, comprising a substantially collapsible and/or deformable body and suitable to be removably installed at a substantially correspondence of a front part of a bumper (10), in particular of a heavy-duty bumper (10) configured to be installed on the front portion of a vehicle (100); the shock-absorbing element (20) being configured and specifically designed to reduce - through a deformation and/or a breaking - an impact force transmitted to a pedestrian in case of an impact; the shock-absorbing element (20) comprises a substantially boxed structure defining a front portion (28) and a back portion (27) substantially opposed to said front portion (28), wherein the back portion (27) is the portion which in use is substantially closer to the bumper (10), said boxed structure comprising at least one cavity opening on said back portion (28).

14. A shock-absorbing element according to claim 13, wherein the shock-absorbing element (20), when installed on said bumper (10), is configured to protrude from the front part of the bumper (10) and/or to house at least a part of at least a central part (14) of said bumper;
and/or wherein said shock-absorbing element is configured to make the bumper (10) compliant with CE 78/2009 regulation, optionally with item 2.1, b) and 3.1, b) of Annex 1 of CE78/2009 regulation;
and/or wherein the bumper (10) is specifically targeted and/or destined to be installed on vehicles of M1, M1G, N1 category, in particular with overall mass greater than 2500 kg.
